# FASCICULE DE BREVET EUROPEEN

(11) **EP 3 364 746 B1**
(45) Date de publication et mention de la délivrance du brevet: **03.06.2020**
(21) Numéro de dépôt: 16797594.5
(22) Date de dépôt: 24.10.2016
(51) Int. Cl.: A01G 25/16, A01G 27/00

(54) **SYSTEME D'IRRIGATION AUTONOME**
AUTONOMES BEWÄSSERUNGSSYSTEM
AUTONOMOUS IRRIGATION SYSTEM

(30) Priorité: 22.10.2015 FR 1560053; 14.03.2016 FR 1652092
(43) Date de publication de la demande: 29.08.2018
(73) Titulaire: Aqualone, Noumea Nouvelle Caledonie 98800 (FR)
(72) Inventeur: BALET, Bernard, Noumea 98857 (NC)
(74) Mandataire: LLR
(86) Numéro de dépôt international: PCT/FR2016/052759
(87) Numéro de publication internationale: WO 2017/068308

(56) Documents cités:
- WO-A1-2006/058976
- FR-A1- 2 416 645
- US-A- 4 967 789
- US-A1- 2015 289 463
- Bernie Aqualone: "Aqualone", youtube, 22 octobre 2015 (2015-10-22), page 1 pp., XP054976958, Extrait de l'Internet: URL:https://www.youtube.com/watch?v=Hr925y plS80 [extrait le 2016-11-30]

## Description

L'invention concerne l'arrosage d'un milieu, par exemple d'un sol consacré à l'agriculture ou à l'horticulture et plus généralement de tout sol nécessitant un arrosage.

Habituellement, afin d'économiser l'eau destinée à l'arrosage d'un milieu, on divise celui-ci en au moins deux zones distinctes. Puis, on arrose séquentiellement chaque zone. Pour ce faire, on installe une vanne entre une arrivée d'eau et chaque moyen d'arrosage, qui peut être par exemple un asperseur, d'une zone. Ainsi, il est nécessaire de déterminer, en fonction notamment des conditions hygrométriques, d'une part à quel moment il est nécessaire d'arroser l'une des zones et, d'autre part, la durée de la séquence d'arrosage.

Généralement, on utilise un programmateur électrique relié à une électrovanne par zone à arroser. A partir des données hygrométriques moyennes connues de la région, un opérateur règle le programmateur afin d'arroser chaque zone à des moments et pendant des durées prédéfinis.

Ainsi, l'arrosage d'une zone a lieu à des moments et pendant des durées prédéfinis. C'est pourquoi, il est possible, par exemple en cas d'événement pluvieux exceptionnel, qu'une zone soit arrosée alors que cela n'est pas nécessaire. A l'inverse, par exemple en cas de sécheresse inhabituelle, il est possible que la zone ne soit pas, ou en tous cas pas suffisamment, arrosée alors qu'elle le requiert. Dans de tels cas, l'opérateur doit déclencher lui-même l'arrosage en modifiant le réglage du programmateur.

WO2006/058976 A1, US 4967 789 A et FR 2 416 645 A1 illustrent des exemples de dispositif autonome d'arrosage d'un milieu à arroser. Un but de l'invention est de fournir un dispositif de commande d'arrosage autonome qui permet de déclencher une séquence d'arrosage uniquement lorsque le milieu le requiert.

Pour ce faire, on prévoit, selon l'invention, un dispositif autonome d'arrosage d'un milieu à arroser selon la revendication 1.

La paroi en céramique poreuse assure une corrélation entre la teneur en liquide d'arrosage du milieu à arroser et la quantité de liquide présente dans le bac témoin.

Le dispositif selon l'invention est donc apte à déclencher une séquence d'arrosage uniquement lorsque le milieu le requiert. L'état hygrométrique du bac témoin est donc un reflet fidèle de celui du milieu à arroser. Cette caractéristique permet donc de déclencher une séquence d'arrosage lorsque le milieu à arroser le requiert et également de stopper la séquence d'arrosage lorsque le milieu à arroser est suffisamment humide.

Le dispositif de l'invention comporte en outre les caractéristiques suivantes
- il comprend des moyens d'évacuation du liquide d'arrosage hors du bac témoin. Les moyens d'évacuation du liquide d'arrosage hors du bac témoin permettent d'ajuster la durée qui s'écoule entre le déclenchement de deux séquences d'arrosage indépendamment de l'état hydrique du milieu à arroser. Ainsi, on peut ajuster la durée d'une séquence d'arrosage et l'intervalle de temps qui s'écoule entre deux séquences d'arrosage. Il est notamment possible de réduire le temps qui s'écoule entre deux séquences d'arrosage, ce qui est par exemple souhaitable lorsque le bac témoin comprend un substrat qui est particulièrement drainant tel qu'une fibre de coco, une laine de roche ou encore du sable.
- les moyens d'évacuation du liquide d'arrosage hors du bac témoin sont aptes à évacuer le liquide d'arrosage du bac témoin lorsque le volume en liquide d'arrosage dans le bac témoin dépasse un seuil de remplissage prédéterminé.
- il comprend des moyens permettant de régler le seuil de remplissage prédéterminé du bac témoin en liquide d'arrosage. C'est donc l'opérateur qui ajuste simplement l'intervalle de temps qui s'écoule entre deux séquences d'arrosage.

Le dispositif de l'invention comporte en outre les caractéristiques suivantes prises seules ou combinées entre elles :
- les moyens d'évacuation du liquide d'arrosage du bac témoin comprennent un tuyau.
- les moyens d'évacuation du liquide d'arrosage hors du bac témoin comprennent un siphon.
- le siphon comprend un matériau apte à drainer le liquide d'arrosage par capillarité.

Ces moyens permettent d'évacuer simplement le liquide d'arrosage hors du bac témoin.
- une différence d'altitude entre deux extrémités du siphon est réglable. On peut donc régler le débit d'écoulement du liquide d'arrosage hors du bac.
- le débit d'écoulement du liquide d'arrosage qui quitte le siphon est réglable, par des moyens de pincement ou d'étranglement, par exemple commandés par une vis de réglage.
- la paroi en céramique poreuse forme un récipient apte à recevoir le milieu à arroser. Il s'agit d'une disposition simple pour recueillir le liquide d'arrosage et garantir que la teneur en liquide d'arrosage du milieu à arroser est étroitement liée à la quantité de liquide d'arrosage dans le bac témoin.
- le récipient et la vanne sont disposés côte à côte et sont, de préférence, de même hauteur et alignés selon une direction horizontale. Le dispositif est alors très peu encombrant. Une dimension, selon une direction verticale, du dispositif est relativement faible de préférence inférieure à 10 cm, si bien que le dispositif peut être enterré et ainsi être invisible.
- la vanne est une vanne à commande magnétique comportant un pointeau ferromagnétique et un aimant fixé à un flotteur. La commande magnétique permet de se passer de tous moyens électriques. En effet, dans les dispositifs de l'art antérieur, le programmateur électrique est relié à l'électrovanne par des câbles électriques. Or, les câbles électriques et de façon générale l'énergie électrique s'accommodent mal de la présence d'eau.
- la vanne comporte un étui pour loger le pointeau ferromagnétique et le bac témoin comporte un fourreau apte à recevoir l'étui tout en servant de guide pour le glissement du flotteur.
- le bac témoin comprend une paroi qui supporte le récipient et forme le fourreau qui loge l'étui. On limite donc d'autant plus l'encombrement du dispositif autonome d'arrosage.
- le fourreau comprend un orifice d'évacuation d'air. Ainsi, on s'assure que l'air présent dans le bac témoin est bien évacué et ne gênera pas le déplacement du flotteur. Cette caractéristique, bien que décrite en combinaison avec la paroi poreuse, pourrait faire l'objet d'une protection séparée car elle peut être mise en œuvre indépendamment du matériau constituant la paroi séparant le milieu à arroser du bac témoin.
- le bac témoin est conformé pour évacuer des eaux de pluie. La fiabilité du dispositif est donc améliorée. De plus, on accroit l'autonomie du dispositif car l'opérateur n'a pas à évacuer lui-même les eaux de pluie. Cette caractéristique, bien que décrite en combinaison avec la paroi poreuse, pourrait faire l'objet d'une protection séparée car elle peut être mise en œuvre indépendamment du matériau constituant la paroi séparant le milieu à arroser du bac témoin.
- le dispositif comprend un conduit d'arrosage disposé entre une sortie de la vanne et le récipient, et, de préférence, le conduit d'arrosage comprend un goutteur, dont le débit de sortie est réglable. Le goutteur permet à l'opérateur de définir, s'il le souhaite, un temps d'arrosage minimal. Si le goutteur est fermé, le liquide d'arrosage n'est jamais envoyé au récipient et le besoin en eau est considéré comme continu. L'arrosage sera donc également continu. A l'inverse, si le goutteur est réglé sur son débit maximal, le récipient sera vite rempli et la condition de fin d'arrosage sera atteinte rapidement. Entre ces deux configurations extrêmes, le goutteur permet d'installer une latence plus ou moins importante entre la variation les conditions hydriques du milieu à arroser et les conditions hydriques de l'échantillon. En d'autres termes, le réglage du débit du goutteur permet de fixer la durée de chaque période d'arrosage. En outre, dans le cas d'un arrosage en extérieur, lorsque le goutteur est fermé, seul un approvisionnement externe en eau de l'organe de mesure du besoin en arrosage, tel qu'un épisode pluvieux peut déclencher la fin de l'arrosage. La présence du goutteur, bien que décrite en combinaison avec l'invention précédente, pourrait faire l'objet d'une protection séparée car elle peut être mise en œuvre indépendamment du matériau constituant la paroi séparant le bac témoin du milieu à arroser.

En outre, l'invention procure une solution d'arrosage aux installations de grandes dimensions dans lesquelles on doit commander une vanne de commande d'arrosage à débit élevé.

À cet effet, l'invention a aussi pour objet un dispositif autonome de commande d'arrosage selon la revendication 14.

Ainsi, comme ce dispositif peut contenir un échantillon témoin du milieu à arroser, il dispose d'une information de besoin en arrosage représentative des conditions hydriques de ce milieu. En conséquence, le dispositif autonome d'arrosage de l'échantillon témoin peut faire passer la vanne de commande d'arrosage de la position fermée à la position ouverte et réciproquement, en fonction du besoin en arrosage de l'échantillon témoin, afin de débuter ou de stopper l'arrosage de l'ensemble du milieu à arroser. Le milieu est donc arrosé lorsqu'il est nécessaire de procéder à un arrosage et uniquement pendant la durée requise. Le dispositif est donc à la fois autonome et économe en liquide d'arrosage.

En outre, lorsque un siphon décrit ci-dessus est présent dans le dispositif autonome de commande d'arrosage, on peut réduire la durée qui s'écoule entre deux séquences d'arrosage afin d'instaurer une multitude de courtes séquences d'arrosage comme le requièrent certains végétaux ou certains types de culture tels que la culture hors-sol également appelée hydroponie. Le dispositif est donc à la fois autonome, adaptable et économe en liquide d'arrosage.

On notera par ailleurs que l'on peut substituer à la vanne à commande fluidique, tout type de vanne adapté. Notamment un vanne à commande hydraulique ou électrique ou encore une vanne à commande pneumatique.

De préférence, le dispositif autonome d'arrosage comprend un conduit d'arrosage et le dispositif autonome de commande d'arrosage comprend un conduit de maintien d'un débit d'arrosage, disposé entre le conduit d'arrosage et un conduit de sortie d'écoulement d'arrosage de la vanne à commande fluidique.

De cette façon, on s'assure que le débit d'arrosage est peu impacté par le débit du conduit de témoignage et ce, même si un goutteur réglé sur son débit minimal limite le flux de liquide dans la conduit d'arrosage.

Cette caractéristique, bien que décrite en combinaison avec la paroi poreuse, pourrait faire l'objet d'une protection séparée car elle peut être mise en œuvre indépendamment du matériau constituant la paroi séparant le milieu à arroser du bac témoin.

On va maintenant décrire, de manière non limitative, trois modes de réalisation de l'invention, à l'aide des figures suivantes :
- la figure 1 est une vue en coupe d'un dispositif autonome de commande d'arrosage selon un premier mode de réalisation,
- la figure 2 est une vue en coupe d'une vanne à commande magnétique du dispositif de la figure 1, en position fermée,
- la figure 3 est une vue analogue à celle de la figure 2, dans laquelle la vanne à commande magnétique est en position ouverte,
- la figure 4 est une vue en coupe d'un dispositif autonome de commande d'arrosage selon un deuxième mode de réalisation de l'invention, et
- la figure 5 est une vue en coupe d'un dispositif autonome de commande d'arrosage selon un troisième mode de réalisation de l'invention.

Dans la présente description, le liquide d'arrosage est de l'eau. On emploie donc le mot « eau » pour désigner ce liquide, mais l'invention n'est pas limitée à ce seul liquide d'arrosage.

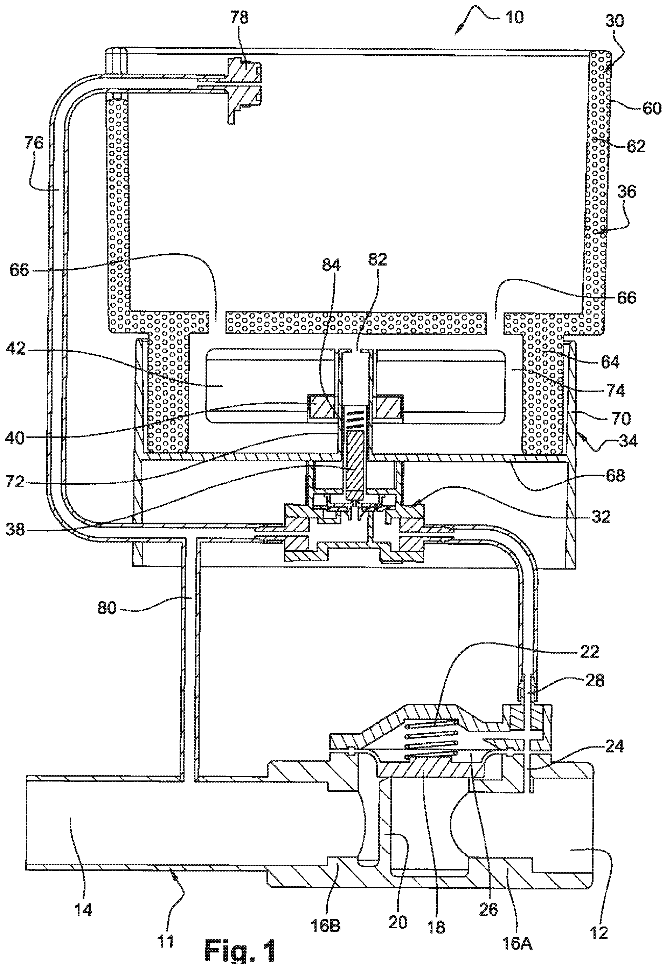

On a représenté, sur la figure 1, un dispositif autonome de commande d'arrosage 10. Ici, le dispositif autonome de commande d'arrosage 10 est destiné à arroser un milieu tel qu'un sol agricole, avec de l'eau.

Le dispositif autonome de commande d'arrosage 10 comprend :
- une vanne à commande fluidique 11 et
- un dispositif autonome d'arrosage 30.

Le dispositif autonome d'arrosage 30 comprend :
- un bac témoin 34,
- une vanne à commande magnétique 32 apte à passer d'une position fermée à une position ouverte et réciproquement, en fonction du niveau de remplissage du bac témoin 34, et
- une paroi en céramique poreuse 36, apte à se trouver en contact avec le milieu à arroser et séparant le bac témoin 34 dudit milieu à arroser, la céramique étant structurée pour drainer un liquide d'arrosage entre le milieu à arroser et le bac témoin 34.

La vanne à commande fluidique 11 comporte une entrée de fluide 12 et une sortie de fluide 14. L'entrée de fluide 12 et la sortie de fluide 14 sont aussi des entrée et sortie de fluide pour le dispositif autonome de commande d'arrosage 10. L'entrée de fluide 12 est reliée à une arrivée d'eau (non représentée) et la sortie de fluide 14 est reliée à une sortie d'eau (non représentée), par exemple un asperseur, apte à arroser le sol agricole.

Entre l'entrée de fluide 12 et la sortie de fluide 14, la vanne à commande fluidique 11 comprend un conduit amont 16A et un conduit aval 16B, lesquels sont ici formés d'un seul tenant avec l'entrée 12 et la sortie 14, sans que cela ne soit aucunement limitatif.

Entre le conduit amont 16A et le conduit aval 16B, une membrane étanche 18 repose sur un siège 20. Un ressort 22 repousse la membrane étanche 18 en appui sur son siège 20. En dérivation depuis le conduit amont 16A, un conduit 24 mène à une chambre 26 délimitée par la membrane étanche 18 et dans laquelle est disposé le ressort 22. En outre, le conduit 24 est relié à une sortie de commande 28 de la vanne à commande fluidique 11.

De plus, le dispositif autonome de commande d'arrosage 10 comprend le dispositif autonome d'arrosage 30. Ce dispositif autonome d'arrosage 30 comporte une vanne à commande magnétique 32, un bac témoin 34 et une paroi 36 en céramique poreuse.

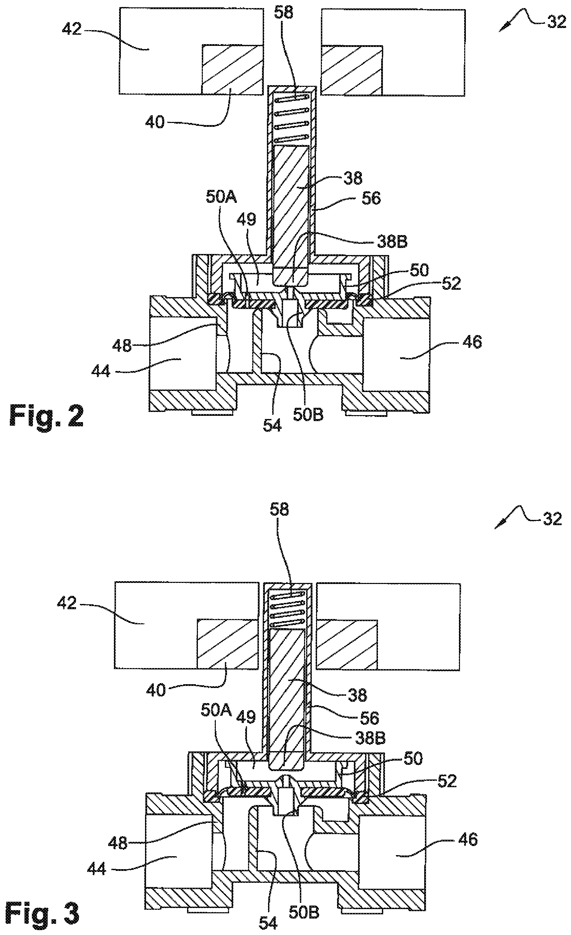

La vanne à commande magnétique 32, représentée plus en détail aux figures 2 et 3, comporte un pointeau ferromagnétique 38 mobile par translation axiale dans un étui 56, un aimant 40 fixé à un flotteur 42, une entrée de fluide 44, une sortie de fluide 46, un canal de circulation de fluide 48 reliant l'entrée 44 et la sortie 46 de fluide, et un obturateur formé d'une coupelle d'obturation 50 couplée à une membrane d'étanchéité 52 annulaire, dont la périphérie est sertie dans la paroi du canal de circulation de fluide 48. La membrane délimite, au-dessus du canal de circulation de fluide 48, une chambre de pression 49. L'obturateur, c'est-à-dire la coupelle 50 couplée à la membrane 52, est mobile par translation dans la direction axiale du pointeau et la membrane 52 repose, dans une des positions de fin de course de l'obturateur, sur un siège 54.

En outre, un ressort 58, disposé dans l'étui 56, exerce une pression sur le pointeau ferromagnétique 38 afin que ce dernier s'appuie contre la coupelle d'obturation 50 et applique la membrane d'étanchéité 52 contre le siège 54, de façon à empêcher le liquide d'arrosage provenant de l'entrée de fluide 44 d'atteindre la sortie de fluide 46.

La coupelle d'obturation 50 et la membrane d'étanchéité 52 comprennent :
- un premier canal d'égalisation de pression 50A de petit diamètre qui établit une communication fluidique entre les faces inférieure et supérieure de la membrane d'étanchéité 52, c'est à dire entre l'entrée de fluide 44 et la chambre de pression 49 ; et
- un second canal d'égalisation de pression 50B de plus gros diamètre que le premier canal d'égalisation de pression 50A, qui établit une communication fluidique entre les faces inférieure et supérieure de la membrane d'étanchéité 52, c'est-à-dire entre la chambre de pression et la sortie de fluide 46. Ce second canal se trouve en regard d'une extrémité inférieure (par rapport au dessin) du pointeau ferromagnétique 38. Lorsque le pointeau ferromagnétique appuie sur la coupelle d'obturation 50, son extrémité inférieure 38B bouche le second canal d'égalisation de pression 50B, si non hermétiquement, au moins de manière à réduire son passage de manière que le débit de liquide d'arrosage à travers ce second canal d'égalisation de pression 50B devienne inférieur au débit de liquide d'arrosage dans le premier canal d'égalisation de pression. A l'inverse, lorsque le pointeau est distant de la coupelle d'obturation 50, le liquide d'arrosage peut traverser le second canal d'égalisation de pression à un débit supérieur au débit de liquide d'arrosage à travers le premier canal d'égalisation de pression 50A.

Comme on le voit sur la figure 2, lorsque l'aimant 40 est positionné à distance du pointeau ferromagnétique 38, la force de rappel du ressort 58 prédomine et le second canal d'égalisation de pression 50B est bouché par l'extrémité inférieure 38B du pointeau ferromagnétique 38. La membrane d'obturation 50 est donc soumise sur ses faces inférieure et supérieure à la pression du liquide d'arrosage présent dans l'entrée de fluide 12, mais comme la quantité de liquide d'arrosage qui peut entrer dans la chambre de pression 49 (par le premier canal 50A) est supérieure à la quantité de liquide d'arrosage qui peut quitter la chambre de pression 49 (par le second canal 50B), la pression qui règne au-dessus de la membrane est supérieure à celle qui règne en dessous et la membrane s'applique contre son siège. Le liquide d'arrosage ne peut donc circuler depuis l'entrée de fluide 44 jusqu'à la sortie de fluide 46. Cette position de fermeture est stable car la différence de pression est accrue si la sortie de fluide 46 reste ouverte, du fait que la surface inférieure de la membrane délimitée par le siège 54 n'est plus soumise à la pression du liquide d'arrosage.

A l'inverse, comme représenté sur la figure 3, lorsque l'aimant 40 se trouve à proximité de l'extrémité supérieure du pointeau ferromagnétique 38, la force d'attraction de l'aimant 40 prédomine par rapport à la force de rappel du ressort 58 et attire le pointeau ferromagnétique 38. Ledit pointeau 38 s'éloigne de la coupelle d'obturation 50 et libère le second canal d'égalisation de pression 50B. La quantité de liquide d'arrosage pouvant entrer dans la chambre de pression 49 devient alors inférieure à la quantité de liquide d'arrosage pouvant quitter ladite chambre de pression 49, de sorte que la pression chute dans la chambre de pression 49 et la membrane se décolle de son siège. Ainsi, le liquide d'arrosage peut traverser la vanne à commande magnétique 32.

Le bac témoin 34 est la partie supérieure 74 d'un corps cylindrique formé par une paroi horizontale 68 et une paroi latérale 70 qui s'étend sur le contour du fond 68. La partie inférieure du corps cylindrique loge la vanne à commande magnétique 32.

De plus, le bac témoin 34 comprend, en son centre, un fourreau 72 qui permet de loger l'étui 56 du pointeau ferromagnétique 38 et qui sert de guide au flotteur 42 contenant l'aimant 40, pour son glissement par translation le long d'une direction verticale.

Enfin, le dispositif autonome d'arrosage 30 comprend la paroi 36 en céramique poreuse, laquelle forme une enveloppe 60 qui entoure et se trouve en contact avec un échantillon témoin 62 du milieu à arroser, ici un échantillon de terre du sol agricole. La céramique poreuse constituant la paroi 36 a une masse volumique comprise entre 1,5 et 2 g/cm³, une résistance à l'écrasement au moins égale à 15MPa, une dureté au moins égale à 5 Mohs, une capacité d'absorption en eau d'au moins 25% en volume, une porosité au moins égale à 40% et comprend des pores ayant un diamètre compris entre 10 et 500µm. L'échantillon témoin 62 est une portion du sol agricole prise en surface ou à une profondeur plus importante. En outre, l'enveloppe 60 a la forme d'un pot ou d'un récipient muni d'une nervure porteuse 64 de révolution qui s'emboite dans le bac témoin 34. Il comprend également, sur sa face inférieure horizontale, deux orifices 66 dont la fonction sera décrite plus loin.

Le dispositif autonome d'arrosage 30 comprend un conduit d'arrosage 76 disposé en sortie 46 de la vanne à commande magnétique 32. Dans ce mode de réalisation, un goutteur 78 est positionné à l'autre extrémité du conduit d'arrosage 76, à l'intérieur du pot formé par l'enveloppe 60.

En outre, le dispositif autonome de commande d'arrosage 10 comporte un conduit de maintien de débit d'arrosage 80 qui est disposé en dérivation depuis le conduit d'arrosage 76 vers la vanne à commande fluidique 11.

On va maintenant décrire le fonctionnement du dispositif autonome de commande d'arrosage 10, en référence à la figure 1.

La sortie de commande 28 de la vanne à commande fluidique 11 est reliée à l'entrée de fluide 44 de la vanne à commande magnétique 32. Ainsi, c'est la vanne à commande magnétique 32 qui commande l'ouverture et la fermeture de la vanne à commande fluidique 11. En effet, lorsque la sortie de fluide 46 de la vanne à commande magnétique 32 est fermée, le liquide d'arrosage provenant de l'entrée de fluide 12 du dispositif autonome de commande d'arrosage 10 s'écoule dans la chambre 26 de la vanne à commande fluidique 11 où elle exerce une pression sur la membrane 18 de façon à fermer la vanne à commande fluidique 11. A l'inverse, lorsque la sortie de fluide 46 de la vanne à commande magnétique 32 est ouverte, la pression du liquide d'arrosage dans la chambre 26 de la vanne à commande fluidique 11 chute, entraînant l'ouverture de la vanne à commande fluidique 11. Dans cette dernière configuration, le liquide d'arrosage provenant de l'entrée de fluide 12 du dispositif autonome de commande d'arrosage 10 peut rejoindre la sortie de fluide 14 du dispositif autonome de commande d'arrosage 10. Le liquide d'arrosage s'écoule donc dans la vanne à commande fluidique 11 depuis l'arrivée d'eau, par exemple un réservoir (non représenté) destiné à l'irrigation des sols, jusqu'à la sortie d'eau, par exemple un asperseur (non représenté), afin d'arroser le sol agricole.

Ainsi, c'est la vanne à commande magnétique 32 qui contrôle le début et la fin de l'écoulement dans la vanne à commande fluidique 11 et donc le début et la fin d'une séquence d'arrosage. La vanne à commande magnétique 32 est donc apte à occuper une position fermée, dans laquelle l'arrosage est empêché, et une position ouverte, dans laquelle l'arrosage est autorisé.

Lors d'une séquence d'arrosage, la vanne à commande magnétique 32 est en position ouverte. Dans ce cas, le conduit d'arrosage 76, qui est relié à la sortie 46 de la vanne à commande magnétique 32 déverse du liquide d'arrosage, par l'intermédiaire du goutteur 78, dans l'échantillon témoin 62 de milieu contenu par la paroi 36. L'échantillon témoin 62 absorbe une partie du liquide d'arrosage en fonction de ses capacités d'absorption et en dégorge une partie dans la paroi 36. Comme la paroi 36 comprend un matériau en céramique poreuse, le liquide d'arrosage traverse ce matériau et vient remplir le bac témoin 34.

Le liquide d'arrosage peut aussi rejoindre le bac témoin 34 par l'intermédiaire d'orifices 66. Selon une variante du présent mode de réalisation, les orifices 66 ne sont pas présents et le liquide d'arrosage s'écoule uniquement par les porosités de la paroi 36.

La paroi 36 est donc apte à absorber une partie de liquide d'arrosage et à la drainer vers le bac témoin 34.

Inversement, grâce à sa nervure porteuse 64 qui baigne dans le bac témoin 34, la paroi 36 peut remplir ses pores de liquide d'arrosage par capilarité et diffuser le liquide d'arrosage dans l'échantillon témoin 62 à mesure que ce dernier voit sa teneur en liquide d'arrosage (humidité si le liquide d'arrosage est de l'eau) diminuer. La paroi poreuse 36 assure donc une corrélation entre la teneur en liquide d'arrosage de l'échantillon témoin 32 et la quantité de liquide d'arrosage présente dans le bac témoin 34.

L'augmentation du niveau en liquide d'arrosage dans le bac témoin 34 provoque l'élévation du flotteur 42 qui est fixé à l'aimant 40. Lorsque l'aimant 40 s'éloigne suffisamment du pointeau ferromagnétique 38, comme précédemment décrit, la vanne à commande magnétique 32 se ferme. Ainsi, c'est le niveau en liquide d'arrosage dans le bac témoin 34 qui détermine l'ouverture et la fermeture de la vanne à commande magnétique 32 et, par suite, l'ouverture et la fermeture de la vanne à commande fluidique 11 et donc l'arrosage du sol agricole. Or, comme le niveau en liquide d'arrosage dans le bac témoin 34 est corrélé au besoin en arrosage de l'échantillon de milieu 32 grâce à la paroi en céramique poreuse 36, l'arrosage du sol agricole est contrôlé par le besoin en arrosage de l'échantillon témoin 62.

On peut donc décomposer une séquence de fonctionnement du système d'arrosage 10 de la façon suivante.

Le flotteur 42 est positionné en son niveau le plus bas. Dans cette position, la vanne à commande magnétique 32 est ouverte et l'arrosage du sol agricole est enclenché. Parallèlement, l'échantillon 62 reçoit de l'eau par le goutteur 78. Une partie de cette eau est absorbée par l'échantillon 62, tandis que l'excédent remplit le bac témoin 34 et fait monter le flotteur 42. Lorsque ce dernier est suffisamment haut, l'arrosage s'arrête.

La quantité d'eau en excès accumulée dans le bac témoin 34 simule la réserve d'eau présente dans le sous-sol du sol agricole, qui permet de réhydrater les couches superficielles du sol à mesure qu'elles se dessèchent.

Après arrêt de l'arrosage, l'eau contenue l'échantillon témoin 62 est progressivement consommée par absorption par les végétaux du milieu ou évaporation. À mesure de cette consommation, la paroi poreuse 36 diffuse dans l'échantillon témoin 62 l'eau qu'elle pompe par capillarité dans le bac témoin 34. Tant que l'échantillon 62 et la paroi 36 ne sont pas secs, c'est qu'il reste de l'eau dans le bac témoin 34 et il ne se déclenche pas de cycle d'arrosage, car l'aimant du flotteur reste au-dessus du pointeau.

Puis, lorsque toute l'eau a été consommée, le flotteur 42 redescend et déclenche un nouveau cycle d'arrosage. Ainsi, une nouvelle séquence d'arrosage débute lorsque l'échantillon témoin 62 est sec. Or, comme l'échantillon témoin 62 est de même nature que le sol à arroser, l'arrosage se déclenche lorsque le sol à arroser est également sec.

Réciproquement, lorsque l'échantillon témoin est suffisamment imbibé d'eau, la paroi 36 draine une partie du liquide d'arrosage en excès vers le bac témoin 34, mettant fin à une séquence d'arrosage.

De plus, dans le cas d'un arrosage en eau et d'un sol agricole non couvert, les eaux de pluie se déversent dans le bac témoin 34 et provoquent, de la même manière que précédemment décrit, l'élévation du flotteur 42 et l'arrêt de l'arrosage.

Le bac témoin 34 est donc apte à faire passer la vanne à commande magnétique 32 de la position fermée à la position ouverte et réciproquement, en fonction du réel besoin en eau du milieu à arroser.

En outre, une partie du liquide d'arrosage qui quitte la sortie 46 de la vanne à commande magnétique ne traverse pas le conduit d'arrosage 76 mais gagne la sortie de fluide 14 par l'intermédiaire du conduit de maintien du débit d'arrosage 80. Ce conduit 80 permet de maintenir un débit minimal dans la vanne à commande magnétique 32 malgré la présence du goutteur 78 et son éventuel réglage à un très faible débit.

De plus, comme on le voit sur la figure 1, le bac témoin 34 est conformé pour permettre l'évacuation des eaux de pluie du fait que sa paroi latérale 70 ne dépasse pas la hauteur de la nervure porteuse 64. Les excédents d'eau de pluie qui atteignent l'intérieur du récipient 60 sont donc drainés jusqu'au bac témoin, d'où ils sont évacués par débordement hors du bac témoin 34. Cette disposition permet de garantir que le bac témoin 34 ne contienne jamais plus que l'équivalent des quantités d'eau disponibles dans les sous-couches proches du sol à arroser.

En outre, sur son extrémité supérieure, dans une direction verticale, le fourreau 72 comporte un orifice 82 destiné à permettre l'évacuation d'air présent dans le bac témoin 34. Ainsi, l'air ne s'accumule pas dans le bac témoin et ne risque pas d'influencer le déplacement du flotteur 30, puisqu'il est évacué depuis l'orifice 82 et dans le jeu 84 existant entre le fourreau 72 et l'étui 56 de la vanne de commande d'arrosage 32 et aboutit à l'air libre sous le fond 68 du bac témoin 34.

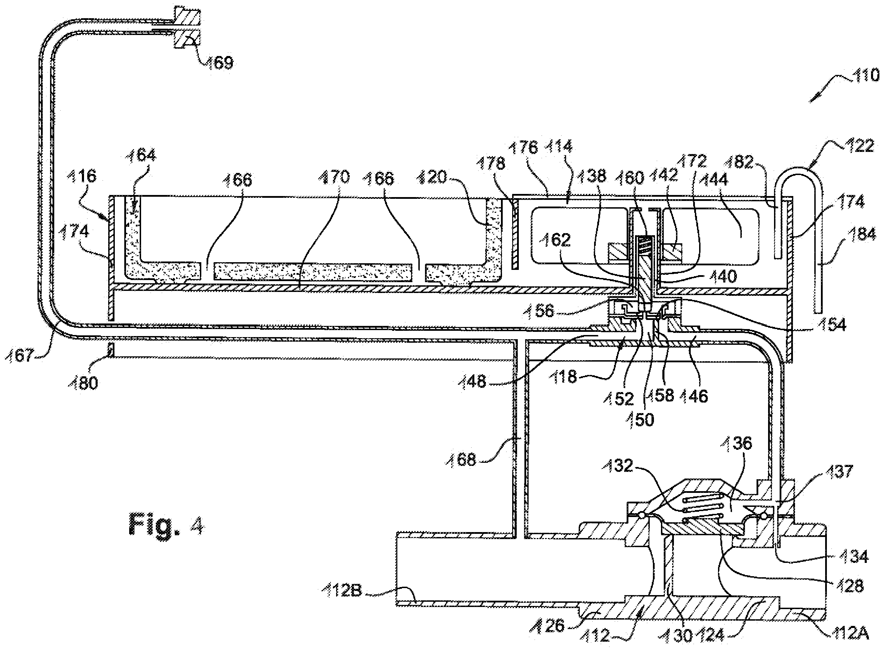

On va décrire maintenant la figure 4 sur laquelle est représentée un dispositif autonome de commande d'arrosage 100 selon un deuxième mode de réalisation qui est destiné à arroser un milieu tel qu'un sol agricole, avec de l'eau.

Le dispositif autonome de commande d'arrosage 100 comprend :
- une vanne à commande fluidique 112 et
- un dispositif autonome d'arrosage 114.

Le dispositif autonome d'arrosage 114 comprend :
- un bac témoin 116,
- une vanne 118 à commande magnétique apte à passer d'une position fermée à une position ouverte et réciproquement, en fonction du niveau de remplissage du bac témoin 116,
- une paroi en céramique poreuse 120, apte à se trouver en contact avec le milieu à arroser, ou comme on va le voir dans ce mode de réalisation, avec un échantillon du milieu à arroser, et séparant le bac témoin 116 dudit milieu à arroser, la céramique étant structurée pour drainer un liquide d'arrosage entre le milieu à arroser et le bac témoin 116, et
- des moyens d'évacuation du liquide d'arrosage hors du bac témoin 116.

Ici, la vanne 118 est à commande magnétique. Selon des variantes du présent mode de réalisation, la vanne 118 est à commande pneumatique ou une vanne à commande hydraulique. De façon générale, on peut utiliser, dans le cadre de l'invention, tous types de vanne.

Dans ce mode de réalisation, les moyens d'évacuation du liquide d'arrosage hors du bac témoin 116 comprennent un siphon 122 que l'on décrira en détail plus loin.

On notera par ailleurs qu'il est également possible de ne pas disposer l'échantillon du milieu à arroser dans la paroi en céramique poreuse 120. En effet, l'élément en céramique suffit à lui-seul à reproduire la demande hydrique du milieu à arroser.

La vanne à commande fluidique 112 comporte une entrée de fluide 112A et une sortie de fluide 112B. L'entrée de fluide 112A et la sortie de fluide 112B sont aussi une entrée et une sortie de fluide pour le dispositif autonome de commande d'arrosage 100. L'entrée de fluide 112A est reliée à une arrivée d'eau (non représentée) et la sortie de fluide 112B est reliée à une sortie d'eau (non représentée), par exemple un asperseur, apte à arroser le sol agricole.

Entre l'entrée de fluide 112A et la sortie de fluide 112B, la vanne à commande fluidique 112 comprend un conduit amont 24 et un conduit aval 126, lesquels sont ici formés d'un seul tenant avec l'entrée 112A et la sortie 112B, sans que cela ne soit aucunement limitatif.

Entre le conduit amont 124 et le conduit aval 126, une membrane étanche 128 repose sur un siège 130. Un ressort 132 repousse la membrane étanche 128 en appui sur son siège 130. En dérivation depuis le conduit amont 124, un conduit 134 mène à une chambre 136 délimitée par la membrane étanche 128 et dans laquelle est disposé le ressort 132. En outre, le conduit 134 est relié à une sortie de commande 137 de la vanne à commande fluidique 112.

On va maintenant décrire plus en détail la vanne 118 à commande magnétique.

La vanne 118 à commande magnétique comporte un pointeau ferromagnétique 138 mobile par translation axiale dans un étui 140, un aimant 142 fixé à un flotteur 144, une entrée de fluide 146, une sortie de fluide 148, un canal de circulation de fluide 150 reliant l'entrée 146 et la sortie 148 de fluide, et un obturateur formé d'une coupelle d'obturation 152 couplée à une membrane d'étanchéité 154 annulaire, dont la périphérie est sertie dans la paroi du canal de circulation de fluide 150.

La membrane d'étanchéité 154 délimite, au-dessus du canal de circulation de fluide 50, une chambre de pression 156. L'obturateur, c'est-à-dire la coupelle 152 couplée à la membrane d'étanchéité 154, est mobile par translation dans la direction axiale du pointeau ferromagnétique 138 et la membrane d'étanchéité 154 repose, dans une des positions de fin de course de l'obturateur, sur un siège 158.

En outre, un ressort 160, disposé dans l'étui 140, exerce une pression sur le pointeau ferromagnétique 138 afin que ce dernier s'appuie contre la coupelle d'obturation 152 et applique la membrane d'étanchéité 154 contre le siège 158, de façon à empêcher le liquide d'arrosage provenant de l'entrée de fluide 146 d'atteindre la sortie de fluide 148.

La coupelle d'obturation 152 et la membrane d'étanchéité 154 comprennent :
- un premier canal d'égalisation de pression de petit diamètre qui établit une communication fluidique entre les faces inférieure et supérieure de la membrane d'étanchéité 154, c'est à dire entre l'entrée de fluide 146 et la chambre de pression 156 ; et
- un second canal d'égalisation de pression 162 de plus gros diamètre que le premier canal d'égalisation de pression, qui établit une communication fluidique entre les faces inférieure et supérieure de la membrane d'étanchéité 154, c'est-à-dire entre la chambre de pression et la sortie de fluide 148. Ce second canal 162 se trouve en regard d'une extrémité inférieure (par rapport au dessin) du pointeau ferromagnétique 138. Lorsque le pointeau ferromagnétique appuie sur la coupelle d'obturation 152, son extrémité inférieure bouche le second canal d'égalisation de pression 162, si non hermétiquement, au moins de manière à réduire son passage de manière que le débit de liquide d'arrosage à travers ce second canal d'égalisation de pression 162 devienne inférieur au débit de liquide d'arrosage dans le premier canal d'égalisation de pression. A l'inverse, lorsque le pointeau est distant de la coupelle d'obturation 152, le liquide d'arrosage peut traverser le second canal d'égalisation de pression 162 à un débit supérieur au débit de liquide d'arrosage à travers le premier canal d'égalisation de pression.

Lorsque l'aimant 142 est positionné à distance du pointeau ferromagnétique 138, la force de rappel du ressort 160 prédomine et le second canal d'égalisation de pression 162 est bouché par l'extrémité inférieure du pointeau ferromagnétique 138. La coupelle d'obturation 152 est donc soumise sur ses faces inférieure et supérieure à la pression du liquide d'arrosage présent dans l'entrée de fluide 146, mais comme la quantité de liquide d'arrosage qui peut entrer dans la chambre de pression 156 (par le premier canal) est supérieure à la quantité de liquide d'arrosage qui peut quitter la chambre de pression 156 (par le second canal 162), la pression qui règne au-dessus de la membrane est supérieure à celle qui règne en dessous et la membrane s'applique contre son siège. Le liquide d'arrosage ne peut donc circuler depuis l'entrée de fluide 146 jusqu'à la sortie de fluide 148. Cette position de fermeture est stable car la différence de pression est accrue si la sortie de fluide 148 reste ouverte, du fait que la surface inférieure de la membrane délimitée par le siège 158 n'est plus soumise à la pression du liquide d'arrosage.

A l'inverse lorsque l'aimant 142 se trouve à proximité de l'extrémité supérieure du pointeau ferromagnétique 138, la force d'attraction de l'aimant 142 prédomine par rapport à la force de rappel du ressort 160 et attire le pointeau ferromagnétique 138. Ledit pointeau 138 s'éloigne de la coupelle d'obturation 152 et libère le second canal d'égalisation de pression 162. La quantité de liquide d'arrosage pouvant entrer dans la chambre de pression 156 devient alors inférieure à la quantité de liquide d'arrosage pouvant quitter ladite chambre de pression 156, de sorte que la pression chute dans la chambre de pression 156 et la membrane d'étanchéité 154 se décolle de son siège. Ainsi, le liquide d'arrosage peut traverser la vanne à commande magnétique 118.

De plus, le dispositif autonome d'arrosage 114 comprend la paroi 120 en céramique poreuse, laquelle forme un récipient 164 qui entoure et se trouve en contact avec un échantillon témoin du milieu à arroser, ici un échantillon de terre du sol agricole. La céramique poreuse constituant la paroi 120 a une masse volumique comprise entre 1,5 et 2 g/cm³, une résistance à l'écrasement au moins égale à 15MPa, une dureté au moins égale à 5 Mohs, une capacité d'absorption en eau d'au moins 25% en volume, une porosité au moins égale à 40% et comprend des pores ayant un diamètre compris entre 10 et 500µm. L'échantillon témoin est une portion du sol agricole prise en surface ou à une profondeur plus importante. En outre, le récipient 164 a la forme d'un pot ou d'un sous pot. Il comprend également, sur sa face inférieure horizontale, une pluralité d'orifices 166 dont la fonction sera décrite plus loin.

Le dispositif autonome d'arrosage 114 comprend également un conduit d'arrosage 167 disposé en sortie 148 de la vanne à commande magnétique 118. Dans ce mode de réalisation, un goutteur 169 est positionné à l'autre extrémité du conduit d'arrosage 167, au-dessus du récipient 164. En outre, le dispositif autonome d'arrosage 114 comporte un conduit de maintien de débit d'arrosage 168 qui est disposé en dérivation depuis le conduit d'arrosage 167 vers la sortie de fluide 112B de la vanne à commande fluidique 112. Le débit de sortie en liquide d'arrosage du goutteur 169 est réglable, par exemple au moyen d'un ensemble vis/écrou. Ainsi, Si le goutteur 169 est fermé, le liquide d'arrosage n'est jamais envoyé au récipient et le besoin en liquide d'arrosage est considéré comme continu. L'arrosage sera donc également continu. A l'inverse, si le goutteur 169 est réglé sur son débit maximal, le récipient sera vite rempli et la condition de fin d'arrosage sera atteinte rapidement. Entre ces deux configurations extrêmes, le goutteur 169 permet d'installer une latence plus ou moins importante entre la variation les conditions hydriques du milieu à arroser et les conditions hydriques de l'échantillon. Il s'agit donc d'un moyen supplémentaire de flexibilisation des conditions d'arrosage.

Le bac témoin 116 comprend une paroi horizontale principale 170 qui supporte le récipient 164 et, disposé à proximité du récipient 164, un fourreau 172 qui loge l'étui 140 du pointeau ferromagnétique 138 et qui sert de guide au flotteur 144 contenant l'aimant 142, pour son glissement par translation le long de la direction verticale. Le bac témoin 116 comporte également une paroi verticale périphérique supérieure 174, une paroi horizontale supérieure 176 qui recouvre uniquement le flotteur 144 de la vanne à commande magnétique 118, et une paroi verticale 178, reliée à la paroi horizontale supérieure 176, qui établit partiellement une séparation entre le récipient 164 et le flotteur 144 et définit, avec la paroi verticale périphérique supérieure 174 et la paroi horizontale supérieure 176, une chambre de remplissage en liquide d'arrosage dans laquelle le flotteur 144 peut se déplacer selon la direction verticale. La paroi horizontale supérieure 176 comprend en outre un orifice qui permet d'introduire le siphon 122. Le bac témoin 116 comporte également une paroi verticale inférieure 180 qui loge la coupelle d'obturation 152, la membrane d'étanchéité 154, le siège 158, l'entrée de fluide 146 et la sortie de fluide 148 de la vanne à commande magnétique 118.

Comme on le voit sur la figure 4, le récipient 164 et la vanne à commande magnétique 118 sont disposés côte à côte, sont de même hauteur et sont alignés selon la direction horizontale. Ainsi, l'encombrement du dispositif autonome de commande d'arrosage 110, selon la direction verticale, est réduit à 10 cm, sans que cette hauteur ne soit aucunement limitative. Il est donc possible d'enterrer le dispositif autonome de commande d'arrosage 110, ce qui améliore l'esthétique du milieu à arroser. En outre, le dispositif autonome de commande d'arrosage 110 est ainsi protégé des actes de vandalisme, ce qui est par exemple utile dans le cas de l'irrigation d'installations publiques.

Sur la figure 4, le positionnement du dessin de la vanne sous celui du dispositif autonome ne doit pas être interprété comme signifiant que la vanne doit être installée sous le dispositif.

Le siphon 122 comprend une première portion 182 disposée à proximité dans la chambre du remplissage du flotteur 144 et une seconde portion 84 dont une extrémité libre pend à l'extérieur de la chambre de remplissage, hors du dispositif autonome de commande d'arrosage 110. Par ailleurs, selon une variante, la première portion 182 du siphon 122 est disposée à proximité de la paroi en céramique poreuse 120. De cette façon, le flotteur 144 ne risque pas d'entrer en collision avec la première portion 182 du siphon 122 lorsqu'il se déplace selon la direction verticale. Le siphon 122 comprend un matériau apte à drainer le liquide d'arrosage qui s'accumule dans la chambre de remplissage par capillarité. Dans ce mode de réalisation, le siphon 122 comprend une mèche en matière textile hydrophile. La différence d'altitude entre une extrémité libre de la première portion 182 et l'extrémité libre de la seconde portion 184 est réglable par coulissement du siphon 122 dans l'orifice de la paroi horizontale supérieure 176. Pour ce faire, on peut optionnellement insérer le siphon 122, au moins partiellement dans un fourreau qui permet de coulisser le siphon 122 dans l'orifice de la paroi horizontale supérieure 176 sans endommager le siphon 122 par frottement. En outre, le débit d'écoulement du liquide d'arrosage qui quitte le siphon est réglable, par des moyens de pincement ou d'étranglement, par exemple commandés par une vis de réglage.

On va maintenant décrire le fonctionnement du dispositif autonome de commande d'arrosage 110 et du dispositif autonome d'arrosage

La sortie de commande 137 de la vanne à commande fluidique 112 est reliée à l'entrée de fluide 146 de la vanne à commande magnétique 118. Ainsi, c'est la vanne à commande magnétique 118 qui commande l'ouverture et la fermeture de la vanne à commande fluidique 112. En effet, lorsque la sortie de fluide 148 de la vanne à commande magnétique 118 est fermée, le liquide d'arrosage provenant de l'entrée de fluide 112A du dispositif autonome de commande d'arrosage 110 s'écoule dans la chambre 136 de la vanne à commande fluidique 112 où elle exerce une pression sur la membrane 128 de façon à fermer la vanne à commande fluidique 112. A l'inverse, lorsque la sortie de fluide 148 de la vanne à commande magnétique 118 est ouverte, la pression du liquide d'arrosage dans la chambre 136 de la vanne à commande fluidique 112 chute, entraînant l'ouverture de la vanne à commande fluidique 112. Dans cette dernière configuration, le liquide d'arrosage provenant de l'entrée de fluide 112A du dispositif autonome de commande d'arrosage 110 peut rejoindre la sortie de fluide 112B du dispositif autonome de commande d'arrosage 110. Le liquide d'arrosage s'écoule donc dans la vanne à commande fluidique 112 depuis l'arrivée d'eau, par exemple un réservoir (non représenté) destiné à l'irrigation des sols, jusqu'à la sortie d'eau, par exemple un asperseur (non représenté), afin d'arroser le sol agricole.

Ainsi, c'est la vanne à commande magnétique 118 qui contrôle le début et la fin de l'écoulement dans la vanne à commande fluidique 112 et donc le début et la fin d'une séquence d'arrosage. La vanne à commande magnétique 118 est donc apte à occuper une position fermée, dans laquelle l'arrosage est empêché, et une position ouverte, dans laquelle l'arrosage est autorisé.

Lors d'une séquence d'arrosage, la vanne à commande magnétique 118 est en position ouverte. Dans ce cas, le conduit d'arrosage 167, qui est relié à la sortie 48 de fluide de la vanne à commande magnétique 118, déverse du liquide d'arrosage, par l'intermédiaire du goutteur 169, dans l'échantillon témoin contenu par la paroi 120 en céramique poreuse. L'échantillon témoin absorbe une partie du liquide d'arrosage en fonction de ses capacités d'absorption et en dégorge une partie dans la paroi 120. Comme la paroi 120 comprend un matériau en céramique poreuse, le liquide d'arrosage traverse ce matériau et vient remplir la chambre de remplissage.

Ici, les orifices 166 permettent de diminuer la capacité d'absorption du récipient 164. Selon une variante du présent mode de réalisation, les orifices 166 ne sont pas présents.

La paroi 120 est donc apte à absorber une partie de liquide d'arrosage et à la drainer vers la chambre de remplissage.

Inversement, la paroi 120 peut remplir ses pores de liquide d'arrosage par capillarité et diffuser le liquide d'arrosage dans l'échantillon témoin à mesure que ce dernier voit sa teneur en liquide d'arrosage (humidité si le liquide d'arrosage est de l'eau) diminuer. La paroi poreuse 120 assure donc une corrélation entre la teneur en liquide d'arrosage de l'échantillon témoin et la quantité de liquide d'arrosage présente dans le bac témoin 116.

L'augmentation du niveau en liquide d'arrosage dans la chambre de remplissage provoque l'élévation du flotteur 144 qui est fixé à l'aimant 142. Lorsque l'aimant 142 s'éloigne suffisamment du pointeau ferromagnétique 138, comme précédemment décrit, la vanne à commande magnétique 118 se ferme. Ainsi, c'est le niveau en liquide d'arrosage dans la chambre de remplissage du bac témoin 116 qui détermine l'ouverture et la fermeture de la vanne à commande magnétique 118 et, par suite, l'ouverture et la fermeture de la vanne à commande fluidique 112 et donc l'arrosage du sol agricole. Or, comme le niveau en liquide d'arrosage dans la chambre de remplissage du bac témoin 116 est corrélé au besoin en arrosage de l'échantillon de milieu grâce à la paroi en céramique poreuse 120, l'arrosage du sol agricole est contrôlé par le besoin en arrosage de l'échantillon témoin.

Cependant, notamment lorsque le milieu à arroser comprend un substrat drainant tel qu'une laine de roche ou une fibre de coco, il peut être nécessaire raccourcir le temps qui s'écoule entre deux séquences d'arrosage. Ainsi, en parallèle de l'évaporation (lorsque le liquide d'arrosage est de l'eau) dans l'échantillon témoin, dans la paroi en céramique poreuse 120 et dans la chambre de remplissage, le siphon 122 accélère l'évacuation du liquide d'arrosage hors de la chambre de remplissage du bac témoin 116. L'évacuation du liquide d'arrosage est d'autant plus rapide que la différence d'altitude entre l'extrémité libre de la première portion 182 et l'extrémité libre de la seconde portion 184 est importante. Lorsque ces deux extrémités libres sont à la même altitude ou que l'extrémité libre de la première portion 182 est à une altitude moins élevée que l'extrémité libre de la seconde portion 184, il n'y a pas d'évacuation du liquide d'arrosage hors du bac témoin 116 autre que celle provoquée par l'évaporation. Inversement, lorsque l'extrémité libre de la première portion 182 est à une altitude plus élevée que l'extrémité libre de la seconde portion 184, le liquide d'arrosage est évacué hors du bac témoin 116 avec un débit d'autant plus important que cette différence d'altitude est importante.

En outre, le début de l'évacuation du liquide d'arrosage hors du bac témoin 116 dépend de l'altitude de l'extrémité libre de la première portion 182 du siphon 122. En effet, pour que le liquide d'arrosage contenu dans la chambre de remplissage commence à être évacué, il faut que le niveau en liquide d'arrosage soit tel que l'extrémité libre de la première portion 182 du siphon 122 soit plongée dans le liquide d'arrosage. Ainsi, en ajustant l'altitude de l'extrémité libre de la première portion 182 du siphon 122, on règle un volume de remplissage définissant un seuil de sorte que les moyens d'évacuation du liquide d'arrosage hors du bac témoin 116, ici le siphon 122, sont aptes à évacuer le liquide d'arrosage hors du bac témoin 116 lorsque le volume en liquide d'arrosage dans le bac témoin 116 dépasse un seuil de remplissage prédéterminé.

On peut donc décomposer une séquence de fonctionnement du système d'arrosage 110 de la façon suivante.

Le flotteur 144 est positionné à son niveau le plus bas. Dans cette position, la vanne à commande magnétique 118 est ouverte et l'arrosage du sol agricole est enclenché. Parallèlement, l'échantillon reçoit de l'eau par le goutteur 169. Une partie de cette eau est absorbée par l'échantillon témoin, tandis que l'excédent remplit le bac témoin 116, et notamment la chambre de remplissage, ce qui fait monter le flotteur 144. Lorsque ce dernier est suffisamment haut et arrive à une position de fermeture de la vanne à commande magnétique, l'arrosage s'arrête. La quantité d'eau en excès accumulée dans le bac témoin 116 simule la réserve en liquide d'arrosage présent dans le sol agricole, qui permet de réhydrater les couches superficielles du sol à mesure qu'elles se dessèchent, lorsque le liquide d'arrosage est de l'eau.

Après arrêt de l'arrosage, l'eau contenue dans l'échantillon témoin est progressivement consommée par absorption par les végétaux du milieu, par évaporation et/ou par évacuation hors du bac témoin 116. À mesure de cette consommation, la paroi poreuse 120 diffuse dans l'échantillon témoin l'eau qu'elle pompe par capillarité dans le bac témoin 116. Tant que l'échantillon témoin et la paroi 120 ne sont pas secs, c'est qu'il reste de l'eau dans le bac témoin 116 et il ne se déclenche pas de cycle d'arrosage, car l'aimant 142 du flotteur 144 reste au-dessus du pointeau.

Puis, lorsque toute l'eau a été consommée, le flotteur 144 redescend et déclenche un nouveau cycle d'arrosage. Ainsi, une nouvelle séquence d'arrosage débute lorsque l'échantillon témoin est suffisamment sec. Or, comme l'échantillon témoin est de même nature que le sol à arroser, l'arrosage se déclenche lorsque le sol à arroser est également suffisamment sec ou en tous cas en phase d'assèchement. Réciproquement, lorsque l'échantillon témoin est suffisamment imbibé d'eau, la paroi 120 draine une partie du liquide d'arrosage en excès vers le bac témoin 116, et notamment la chambre de remplissage, mettant fin à une séquence d'arrosage. Le bac témoin 116 est donc apte à faire passer la vanne à commande magnétique 118 de la position fermée à la position ouverte et réciproquement, en fonction du réel besoin en eau du milieu à arroser.

En outre, une partie du liquide d'arrosage qui quitte la sortie 148 de la vanne à commande magnétique 118 ne traverse pas le conduit d'arrosage 167 mais gagne la sortie de fluide 112B par l'intermédiaire du conduit de maintien du débit d'arrosage 168. Ce conduit 168 permet de maintenir un débit minimal dans la vanne à commande magnétique 118 malgré la présence du goutteur 169.

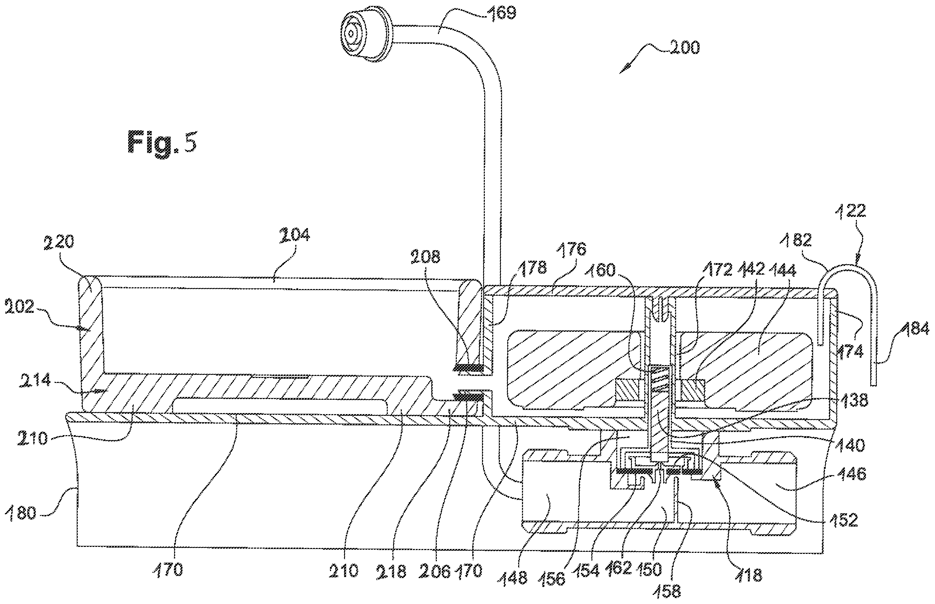

On a représenté à la figure 5 un troisième mode de réalisation de l'invention. Seules les différences avec le deuxième mode vont être explicitement décrites. Les références numériques des éléments communs aux deuxième et troisième modes de réalisation sont inchangées. Seule la partie supérieure du dispositif autonome de commande d'arrosage 200 est représentée, c'est-à-dire le dispositif autonome d'arrosage 214.

Plusieurs parois en céramique poreuse 220, dont les propriétés sont similaires à celles décrites plus haut, forment un bac de rétention 202 en liquide d'arrosage. Le bac de rétention 202 est optionnellement recouvert par un couvercle 204 destiné à empêcher la pluviométrie d'impacter le remplissage direct du bac de rétention 202.

Le bac de rétention 202 comprend en outre un orifice délimité par un contour 218. De même, la paroi verticale 178, qui contribue à délimiter la chambre de remplissage en liquide d'arrosage dans laquelle le flotteur 144 est apte à se déplacer selon la direction verticale, comprend un orifice délimité par un contour 206 de manière à installer un canal de communication en liquide d'arrosage entre le bac de rétention 202 et la chambre de remplissage en liquide d'arrosage.

Pour assurer l'étanchéité du dispositif autonome de commande d'arrosage 200, un joint d'étanchéité 208 est disposé entre les contours 218 et 206 qui définissent le canal permettant la communication en liquide d'arrosage.

Le bac de rétention 202 repose sur deux pieds 210 qui reposent eux-mêmes sur la paroi horizontale principale 170. De cette façon, on définit, entre les deux pieds 210 et une paroi horizontale inférieure du bac de rétention 202, un espace qui assure une circulation d'air et qui permet ainsi d'accroître l'évaporation du liquide d'arrosage absorbé par le bac de rétention 202, qui comprend le matériau en céramique poreuse.

Un des avantages de ce troisième mode de réalisation est que, comme le bac de rétention 202 comprend le matériau en céramique poreuse, il est directement en contact avec le milieu à arroser. Il a donc un comportement en termes d'évaporation du liquide d'arrosage qui est encore plus proche de celui du milieu à arroser.

Dans ce troisième mode de réalisation, comme dans le deuxième, on voit qu'un échantillon témoin de sol n'est pas indispensable et que le matériau en céramique poreuse peut suffire. En particulier, les différents réglages permis par le siphon 122 facilitent le réglage précis du dispositif, hors la présence d'un échantillon témoin de sol.

En outre, on notera qu'on peut utiliser le dispositif autonome d'arrosage 214 sans l'associer à une vanne de commande telle que précédemment décrit. En effet, le dispositif autonome d'arrosage 214 peut être directement relié à une entrée de fluide reliée à un réservoir de liquide d'arrosage par exemple et à une sortie de fluide reliée à un asperseur par exemple.

On comprend que certains composants ou structures décrits dans le cadre d'un mode de réalisation peuvent également être présents dans le dispositif selon les deux autres modes de réalisations. Par exemple, les moyens d'évacuation du liquide d'arrosage tels que le siphon 122 décrit dans le cadre des deuxième et troisième modes de réalisation peuvent très bien être prévus dans le dispositif du premier mode de réalisation, tout comme la disposition horizontale du récipient 164 et de la vanne 118.

De nombreuses autres modifications peuvent être apportées à l'invention sans sortir du cadre de celle-ci qui est définie par le jeu de revendications joint.

On pourra utiliser tout type de moyens d'évacuation du liquide d'arrosage hors du bac témoin 116. Par exemple, on pourra utiliser un tuyau éventuellement associé à un robinet pour permettre à un opérateur de régler manuellement le débit d'évacuation en liquide d'arrosage.

De plus, on pourra utiliser tout type de liquide d'arrosage et notamment une solution aqueuse qui contient des sels minéraux.

En outre, comme on le voit sur les figures 1 et 4, le fourreau 72, 172 comporte un orifice sur son extrémité supérieure, dans la direction verticale, pour permettre l'évacuation d'air présent dans le bac témoin 34, 116. Optionnellement, le fourreau 72, 172 ne comporte pas cet orifice.

## Revendications

1. Dispositif autonome d'arrosage (30, 114, 214) d'un milieu à arroser comprenant:
- un bac témoin (34, 116),
- une vanne (32, 118) apte à passer d'une position fermée à une position ouverte et réciproquement, en fonction du niveau de remplissage du bac témoin (34, 116),
**caractérisé en ce que** le dispositif autonome d'arrosage (30, 114, 214) comprend en outre une paroi (36, 120, 220) en céramique poreuse, apte à se trouver en contact avec le milieu à arroser et séparant le bac témoin (34, 116) dudit milieu à arroser, la céramique étant structurée pour drainer un liquide d'arrosage entre le milieu à arroser et le bac témoin (34, 116), et **en ce que** le dispositif (114, 214) comprend des moyens d'évacuation du liquide d'arrosage hors du bac témoin (116), aptes à évacuer le liquide d'arrosage du bac témoin (116) lorsque le volume en liquide d'arrosage dans le bac témoin (116) dépasse un seuil de remplissage prédéterminé, le dispositif comprenant en outre des moyens permettant de régler le seuil de remplissage prédéterminé du bac témoin (116) en liquide d'arrosage.

2. Dispositif (114, 214) selon la revendication précédente, dans lequel les moyens d'évacuation du liquide d'arrosage du bac témoin (116) comprennent un tuyau.

3. Dispositif (114, 214) selon l'une quelconque des revendications précédentes, dans lequel les moyens d'évacuation du liquide d'arrosage hors du bac témoin (116) comprennent un siphon (122).

4. Dispositif (114, 214) selon la revendication précédente, dans lequel le siphon (122) comprend un matériau apte à drainer le liquide d'arrosage par capillarité.

5. Dispositif (114, 214) selon l'une quelconque des revendications 3 et 4, dans lequel une différence d'altitude entre deux extrémités du siphon (122) est réglable.

6. Dispositif (30, 114, 214) selon l'une quelconque des revendications précédentes, dans lequel la paroi (36, 120, 220) en céramique poreuse forme un récipient (60, 164) apte à recevoir le milieu à arroser.

7. Dispositif (114, 214) selon la revendication précédente, dans lequel le récipient (164) et la vanne (118) sont disposés côte à côte et sont, de préférence, de même hauteur et alignés selon une direction horizontale.

8. Dispositif (30, 114, 214) selon l'une quelconque des revendications précédentes, dans lequel la vanne est une vanne à commande magnétique (32, 118) comportant un pointeau ferromagnétique (38, 138) et un aimant (40, 142) fixé à un flotteur (42, 144).

9. Dispositif (30, 114, 214) selon la revendication précédente, dans lequel la vanne (32, 118) comporte un étui (56, 140) pour loger le pointeau ferromagnétique (38, 138) et le bac témoin (34, 116) comporte un fourreau (72, 172) apte à recevoir l'étui (56, 140) tout en servant de guide pour le glissement du flotteur (42, 144).

10. Dispositif (30, 14, 114) selon la revendication précédente, dans lequel le bac témoin (34, 116) comprend une paroi (70, 170) qui supporte le récipient (60, 164) et forme le fourreau (72, 172).

11. Dispositif (30, 114, 214) selon l'une quelconque des revendications 9 et 10, dans lequel le fourreau (72, 172) comprend un orifice d'évacuation d'air (82).

12. Dispositif (30, 114, 214) selon l'une quelconque des revendications précédentes, dans lequel le bac témoin (34, 116) est conformé pour évacuer des eaux de pluie.

13. Dispositif (30, 114, 214) selon la revendication précédente, comprenant un conduit d'arrosage (76, 167) disposé entre une sortie (46, 148) de la vanne et le récipient (60, 164), et, de préférence, le conduit d'arrosage (76, 167) comprend un goutteur (78, 169).

14. Dispositif autonome de commande d'arrosage (10, 100, 200), **caractérisé en ce qu'**il comprend :
- une vanne à commande fluidique (11, 112) apte à occuper une position fermée dans laquelle l'arrosage est empêché et une position ouverte dans laquelle l'arrosage est autorisé, en fonction de l'écoulement d'un liquide d'arrosage dans une sortie de commande (28) de ladite vanne à commande fluidique (11, 112),
- un dispositif autonome d'arrosage (30, 114, 214) selon l'une quelconque des revendications précédentes, appliqué à un échantillon témoin (62) du milieu à arroser, alimenté par la sortie de commande (28, 137) de la vanne à commande fluidique (11, 112).

15. Dispositif autonome de commande d'arrosage (10, 100, 200) selon la revendication précédente, dans lequel le dispositif autonome d'arrosage (30, 114, 214) comprend un conduit d'arrosage (76, 169) et le dispositif autonome de commande d'arrosage (10, 100, 200) comprend un conduit de maintien (80, 168) d'un débit d'arrosage, disposé entre le conduit d'arrosage (76, 169) et un conduit de sortie d'écoulement d'arrosage (14, 112B) de la vanne à commande fluidique (11, 112).

## Patentansprüche

1. Autonome Bewässerungsvorrichtung (30, 114, 214) für ein zu bewässerndes Medium, umfassend:
- einen Kontrollbehälter (34, 116),
- ein Ventil (32, 118), das in der Lage ist, in Abhängigkeit vom Füllstand des Kontrollbehälters (34, 116) von einer geschlossenen Stellung in eine offene Stellung und umgekehrt überzugehen,
**dadurch gekennzeichnet, dass**
die autonome Bewässerungsvorrichtung (30, 114, 214) weiter eine Wand (36, 120, 220) aus poröser Keramik umfasst, die in der Lage ist, mit dem zu bewässernden Medium in Kontakt zu stehen, und die den Kontrollbehälter (34, 116) von dem zu bewässernden Medium trennt, wobei die Keramik so strukturiert ist, dass eine Bewässerungsflüssigkeit zwischen dem zu bewässernden Medium und dem Kontrollbehälter (34, 116) abgelassen wird,
und dass die Vorrichtung (114, 214) Mittel zum Ableiten der Bewässerungsflüssigkeit aus dem Kontrollbehälter (116) umfasst, die in der Lage sind, die Bewässerungsflüssigkeit aus dem Kontrollbehälter (116) abzuleiten, wenn das Volumen der Bewässerungsflüssigkeit im Kontrollbehälter (116) eine vorgegebene Füllschwelle überschreitet,
wobei die Vorrichtung weiter Mittel umfasst, die es ermöglichen die vorgegebene Füllschwelle des Kontrollbehälters (116) mit Bewässerungsflüssigkeit einzustellen.

2. Vorrichtung (114, 214) nach dem vorstehenden Anspruch, wobei die Mittel zum Ableiten der Bewässerungsflüssigkeit aus dem Kontrollbehälter (116) ein Rohr umfassen.

3. Vorrichtung (114, 214) nach einem der vorstehenden Ansprüche, wobei die Mittel zum Ableiten der Bewässerungsflüssigkeit aus dem Kontrollbehälter (116) einen Siphon (122) umfassen.

4. Vorrichtung (114, 214) nach dem vorstehenden Anspruch, wobei der Siphon (122) ein Material umfasst, das in der Lage ist, die Bewässerungsflüssigkeit durch Kapillarwirkung abzulassen.

5. Vorrichtung (114, 214) nach einem der Ansprüche 3 und 4, wobei ein Höhenunterschied zwischen zwei Enden des Siphons (122) einstellbar ist.

6. Vorrichtung (30, 114, 214) nach einem der vorstehenden Ansprüche, wobei die Wand (36, 120, 220) aus poröser Keramik ein Gefäß (60, 164) bildet, das in der Lage ist, das zu bewässernde Medium aufzunehmen.

7. Vorrichtung (114, 214) nach dem vorstehenden Anspruch, wobei das Gefäß (164) und das Ventil (118) nebeneinander angeordnet sind und vorzugsweise die gleiche Höhe besitzen und gemäß einer horizontalen Richtung ausgerichtet sind.

8. Vorrichtung (30, 114, 214) nach einem der vorstehenden Ansprüche, wobei es sich bei dem Ventil um ein magnetisch gesteuertes Ventil (32, 118) handelt, das eine ferromagnetische Nadel (38, 138) und einen an einem Schwimmer (42, 144) befestigten Magneten (40, 142) umfasst.

9. Vorrichtung (30, 114, 214) nach dem vorstehenden Anspruch, wobei das Ventil (32, 118) ein Gehäuse (56, 140) zur Unterbringung der ferromagnetischen Nadel (38, 138) umfasst und der Kontrollbehälter (34, 116) eine Hülle (72, 172) umfasst, die in der Lage ist, das Gehäuse (56, 140) aufzunehmen und gleichzeitig als Führung für das Gleiten des Schwimmers (42, 144) dient.

10. Vorrichtung (30, 14, 114) nach dem vorstehenden Anspruch, wobei der Kontrollbehälter (34, 116) eine Wand (70, 170) umfasst, die das Gefäß (60, 164) trägt und die Hülle (72, 172) bildet.

11. Vorrichtung (30, 114, 214) nach einem der Ansprüche 9 und 10, wobei die Hülle (72, 172) eine Luftabzugsöffnung (82) umfasst.

12. Vorrichtung (30, 114, 214) nach einem der vorstehenden Ansprüche, wobei der Kontrollbehälter (34, 116) so geformt ist, dass er Regenwasser ableitet.

13. Vorrichtung (30, 114, 214) nach dem vorstehenden Anspruch, umfassend eine Bewässerungsleitung (76, 167), die zwischen einem Auslass (46, 148) des Ventils und dem Gefäß (60, 164) angeordnet ist, wobei die Bewässerungsleitung (76, 167) vorzugsweise einen Tropfer (78, 169) umfasst.

14. Autonome Vorrichtung zur Bewässerungssteuerung (10, 100, 200), **dadurch gekennzeichnet, dass** sie umfasst:
- ein fluidisch gesteuertes Ventil (11, 112), das in der Lage ist, eine geschlossene Stellung, in der eine Bewässerung unterbunden ist, und eine offene Stellung, in der eine Bewässerung zugelassen ist, in Abhängigkeit von der Strömung einer Bewässerungsflüssigkeit in einen Steuerausgang (28) des fluidisch gesteuerten Ventils (11, 112) einzunehmen,
- eine autonome Bewässerungsvorrichtung (30, 114, 214) nach einem der vorstehenden Ansprüche, die auf eine Kontrollprobe (62) des zu bewässernden Mediums angewendet wird, die vom Steuerausgang (28, 137) des fluidisch gesteuerten Ventils (11, 112) versorgt wird.

15. Autonome Vorrichtung zur Bewässerungssteuerung (10, 100, 200) nach dem vorstehenden Anspruch, wobei die autonome Bewässerungsvorrichtung (30, 114, 214) eine Bewässerungsleitung (76, 169) umfasst und die autonome Vorrichtung zur Bewässerungssteuerung (10, 100, 200) eine Leitung zur Aufrechterhaltung (80, 168) eines Bewässerungsstroms umfasst, die zwischen der Bewässerungsleitung (76, 169) und einer Bewässerungsströmungsauslassleitung (14, 112B) des fluidisch gesteuerten Ventils (11, 112) angeordnet ist.

## Claims

1. Autonomous spraying device (30, 114, 214) for a medium to be sprayed comprising:
- a control tank (34, 116),
- a valve (32, 118) adapted to switch from a closed position to an open position and vice versa, depending on the filling level of the control tank (34, 116);
**characterised in that**
the autonomous spraying device (30, 114, 214) further comprises a porous ceramic wall (36, 120, 220) adapted to be in contact with the medium to be sprayed and separating the control tank (34, 116) from said medium to be sprayed, the ceramic being structured so as to drain a spraying liquid between the medium to be sprayed and the control tank (34, 116),
and **in that** the device (114, 214) comprises means for evacuating the spraying liquid from the control tank (116),
adapted to evacuate the spraying liquid from the control tank (116) when the volume of spraying liquid in the control tank (116) exceeds a predetermined filling threshold,
the device further comprising means to adjust the predetermined spraying liquid filling threshold of the control tank (116).

2. Device (114, 214) according to the preceding claim, wherein the means for evacuating the spraying liquid from the control tank (116) comprise a hose.

3. Device (114, 214) according to any one of the preceding claims, wherein the means for evacuating the spraying liquid from the control tank (116) comprise a siphon (122).

4. Device (114, 214) according to the preceding claim, wherein the siphon (122) comprises a material adapted to drain the spraying liquid by capillarity.

5. Device (114, 214) according to claim 3 or 4, wherein a height difference between the two ends of the siphon (122) can be adjusted.

6. Device (30, 114, 214) according to any one of the preceding claims, wherein the porous ceramic wall (36, 120, 220) forms a container (60, 164) adapted to receive the medium to be sprayed.

7. Device (114, 214) according to the preceding claim, wherein the container (164) and the valve (118) are arranged side by side and are preferably the same height and aligned in a horizontal direction.

8. Device (30, 114, 214) according to any one of the preceding claims, wherein the valve is a magnetically-controlled valve (32, 118) comprising a ferromagnetic needle valve (38, 138) and a magnet (40, 142) attached to a float (42, 144).

9. Device (30, 114, 214) according to the preceding claim, wherein the valve (32, 118) comprises a sleeve (56, 140) to house the ferromagnetic needle valve (38, 138) and the control tank (34, 116) comprises a sheath (72, 172) adapted to receive the sleeve (56, 140) while acting as a guide for the float (42, 144) to slide.

10. Device (30, 14, 114) according to the preceding claim, wherein the control tank (34, 116) comprises a wall (70, 170) which supports the container (60, 164) and forms the sheath (72, 172).

11. Device (30, 114, 214) according to claim 9 or 10, wherein the sheath (72, 172) comprises an air evacuation orifice (82).

12. Device (30, 114, 214) according to any one of the preceding claims, wherein the control tank (34, 116) is shaped to evacuate rainwater.

13. Device (30, 114, 214) according to the preceding claim, comprising a spraying pipe (76, 167) arranged between an outlet (46, 148) of the valve and the container (60, 164), and, preferably, the spraying pipe (76, 167) comprises a dripper (78, 169).

14. Autonomous spraying control device (10, 100, 200), **characterised in that** it comprises
- a fluid-controlled valve (11, 112) adapted to take a closed position in which spraying is prevented and an open position in which spraying is allowed, depending on the flow of a spraying liquid in a control outlet (28) of said fluid-controlled valve (11, 112),
- an autonomous spraying device (30, 114, 214) according to any one of the preceding claims applied to a control sample (62) of the medium to be sprayed, supplied by the control outlet (28, 137) of the fluid-controlled valve (11, 112).

15. Autonomous spraying control device (10, 100, 200) according to the preceding claim, wherein the autonomous spraying device (30, 114, 214) comprises a spraying pipe (76, 169) and the autonomous spraying control device (10, 100, 200) comprises a pipe (80, 168) for maintaining a spraying flow rate, arranged between the spraying pipe (76, 169) and a spraying flow outlet pipe (14, 112B) of the fluid-controlled valve (11, 112).
